# FASCICULE DE BREVET EUROPEEN

(11) **EP 3 187 920 B1**
(45) Date de publication et mention de la délivrance du brevet: **19.03.2025**
(21) Numéro de dépôt: 15307168.3
(22) Date de dépôt: 30.12.2015
(51) Int. Cl.: G02C 7/08, G02C 7/10, G02B 27/01

(54) **DISPOSITIF OPHTALMIQUE COMPRENANT UNE LENTILLE OPHTALMIQUE POUR LUNETTE ASSOCIEE A AU MOINS UNE FONCTIONNALITE ELECTRO-COMMANDEE**
OPHTALMISCHE VORRICHTUNG, DIE EINE AUGENLINSE FÜR EINE BRILLE UMFASST, DIE MINDESTENS MIT EINER ELEKTRISCH GESTEUERTEN FUNKTION ASSOZIIERT IST
OPHTHALMIC DEVICE INCLUDING AN OPHTHALMIC LENS FOR A SPECTACLES ASSOCIATED WITH AT LEAST ONE ELECTRICALLY CONTROLLED FUNCTIONALITY

(43) Date de publication de la demande: 05.07.2017
(73) Titulaire: Essilor International, 94220 Charenton-le-Pont (FR)
(72) Inventeur: Bouchier, Aude, 94227 Charenton Cedex (FR); Perrot, Stéphane, 94227 Charenton Cedex (FR); Ballet, Jérôme, 94227 Charenton Cedex (FR); Archembeau, Samuel, 94227 Charenton Cedex (FR); Escaich, David, 94227 Charenton Cedex (FR)
(74) Mandataire: Plasseraud IP

(56) Documents cités:
- EP-A1- 2 063 311
- EP-A1- 2 405 295
- WO-A1-2010/142019
- WO-A2-2012/068527
- WO-A2-2013/188805
- US-A1- 2005 280 769
- US-A1- 2009 262 411
- US-A1- 2012 249 797
- US-B1- 6 366 391

## Description

L'invention concerne un dispositif ophtalmique comprenant une lentille ophtalmique pour lunette associée à au moins une fonctionnalité électro-commandée. Elle concerne également un équipement ophtalmique comprenant au moins une monture et au moins un tel dispositif ophtalmique.

On connait des équipements ophtalmiques permettant d'apporter une ou plusieurs fonctionnalité(s) à des lentilles ophtalmiques pour lunette de manière à contribuer à la correction de l'amétropie d'un porteur et/ou au confort visuel du porteur et/ou à lui apporter des fonctionnalités complémentaires autres que relative à la correction de la vision ou au confort visuel. On peut citer parmi les fonctionnalités connues, à titre d'exemples non limitatif : la variation de la transmission lumineuse (en intensité et/ou en couleur) de la lentille ophtalmique, la variation de la puissance dioptrique de la lentille ophtalmique, la présentation d'information grâce à la lentille ophtalmique.

De manière usuelle, de telles fonctionnalités peuvent être électro-commandées et un ou une pluralité de signaux électriques sont générés par un ou plusieurs dispositif(s) électronique(s) afin de modifier l'état de la fonctionnalité de la lentille ophtalmique en fonction de paramètres. De tels dispositifs électroniques sont par exemple disposés sur ou dans un équipement ophtalmique de manière à activer et/ou à contrôler une fonctionnalité ou des fonctionnalités de la lentille ophtalmique. De manière usuelle, un ou des dispositif(s) électronique(s) est (sont) disposé(s) sur ou dans une monture qui est apte à recevoir une paire de lentilles ophtalmiques et également à générer et transmettre des signaux électriques auxdites lentilles ophtalmiques. Le document US 2009/0262411 A1 décrit une lentille ophtalmique associée à une fonction optique électro commandée. Le document US 6366391 B1 décrit un système de connexion d'un dispositif électronique à un élément électrochrome disposé dans un miroir de véhicule.

De tels équipements ophtalmiques nécessitent des montures d'un type particulier comprenant au préalable le ou les dispositif(s) électronique(s) nécessaires à l'activation et/ou au contrôle d'une fonctionnalité donnée. Or de nombreuses fonctionnalités peuvent être choisies et il en résulte une grande quantité de montures qui doivent être pré-équipées avec lesdits dispositifs électroniques. Des problèmes de stock et/ou de disponibilité desdites montures peuvent en résulter.

La présente invention vise notamment à résoudre ces problèmes.

Ainsi l'invention concerne un dispositif ophtalmique selon la revendication 1.

La disposition d'un dispositif électronique, adapté à activer une fonctionnalité électro-commandée, sur la lentille ophtalmique ou en continuité de matière avec la lentille ophtalmique permet de s'affranchir ou de limiter le nombre de dispositifs électroniques disposés dans une monture destinée à recevoir ladite lentille ophtalmique. Il en résulte notamment la possibilité d'utiliser des montures identiques pour offrir des équipements ophtalmiques comprenant des dispositifs ophtalmiques associés à différentes fonctionnalités électro-commandées.

Selon différents modes de réalisation, le dispositif ophtalmique selon l'invention présente l'une ou plusieurs des caractéristiques des revendications dépendantes 2 à 11, qui peuvent être prises en combinaison selon toutes les variantes techniquement réalisables.

La présente invention vise également un équipement ophtalmique selon la revendication 12.

Les lentilles ophtalmiques du dispositif ophtalmique de la présente invention peuvent être de différentes natures. Elles peuvent comprendre une ou plusieurs fonctionnalité(s) électro-commandée(s) correspondant aux lentilles de types énoncés ci-après :
- lentille ophtalmique électro-commandée à variation de phase, comme par exemple à indice variable électro-commandé, à forme variable grâce à un dispositif fluidique ;
- lentille ophtalmique électro-commandée à variation d'amplitude, comme par exemple à transmission électro-commandée, à variation colorimétrique grâce à un matériau électrochrome, à variation de teinte grâce à des cristaux liquides (« LCD » pour « liquid crystal display » en anglais), à polarisation active ;
- lentille électro-commandée pour piloter une fonction indépendante de la variation de phase et de la variation d'amplitude, comme par exemple un éclairage intégré à la lentille (par exemple pour permettre une luminothérapie), un dispositif pour chauffer la lentille (de manière à produire un effet antibuée ou pour un dispositif photochrome rapide), un dispositif d'acquisition de données sur le porteur (par exemple un eye-tracker) ou de données environnementales (par exemple la température, la luminosité, etc...).

D'autres caractéristiques et avantages de la présente invention apparaîtront dans la description détaillée suivante, se référant aux dessins annexés dans lesquels :
- Les figures 1 et 2 sont des schémas d'un dispositif ophtalmique qui ne fait pas partie de la présente invention ;
- Les figures 3 et 4 sont des schémas relatifs à un dispositif ophtalmique selon la présente invention ;
- La figure 5 est un schéma illustrant la mise en œuvre d'un mode de réalisation correspondant à un dispositif ophtalmique selon la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques. Par ailleurs et afin de faciliter la compréhension des figures, les éléments représentés ne sont pas nécessairement à l'échelle. Par souci de clarté, seuls les éléments utiles à la compréhension des modes de réalisation décrits ont été représentés et seront détaillés.

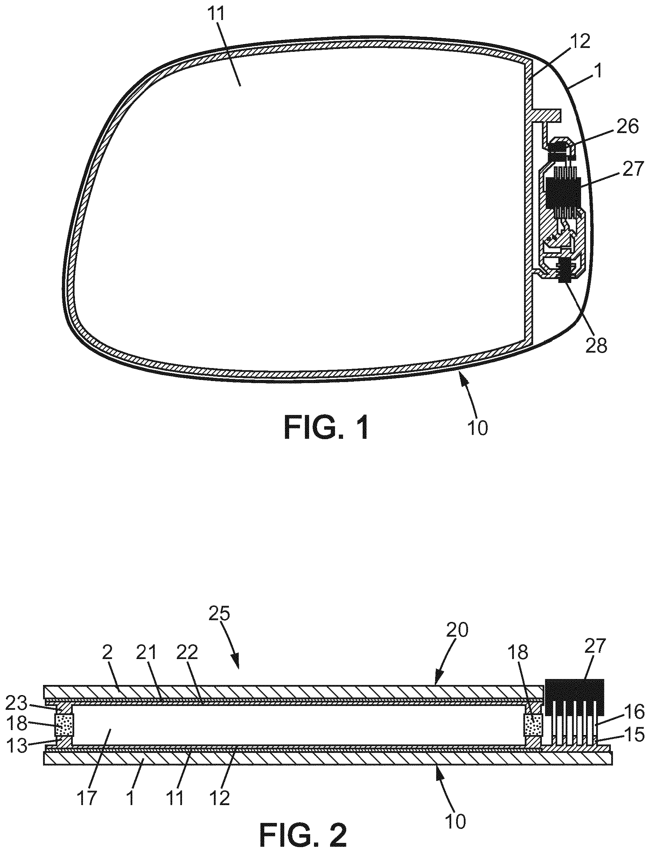

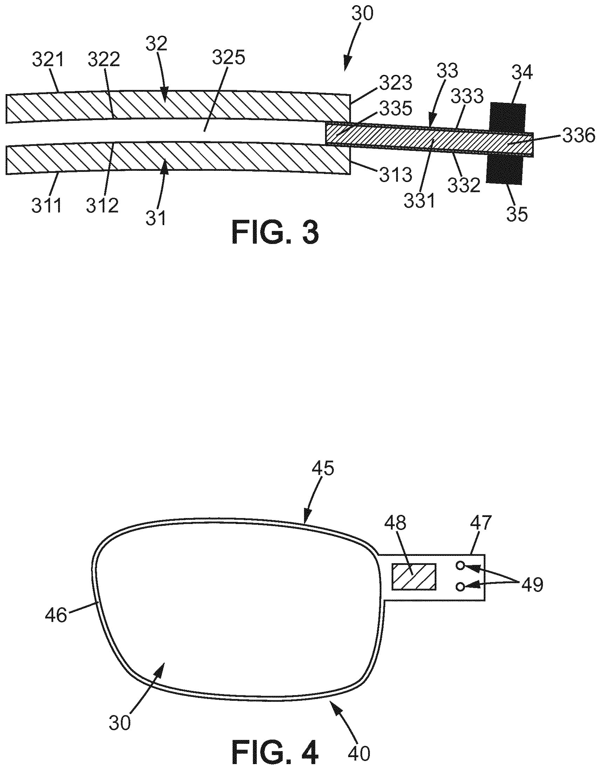

Les figures 1 à 4 correspondent à des modes de réalisation d'un dispositif ophtalmique où la fonctionnalité électro-commandée est une variation de phase de type fonction électrochrome. Le dispositif ophtalmique est noté 25 dans le premier mode de réalisation, qui ne fait pas partie de l'invention, représenté en figure 2 et noté 30 dans le deuxième mode de réalisation, qui fait partie de l'invention, représenté en figures 3 et 4. Le dispositif ophtalmique 25, 30, comprend une lentille ophtalmique pour lunette, associée une fonctionnalité électrochrome et un dispositif électronique adapté à activer ladite fonctionnalité électrochrome.

Selon le premier mode de réalisation, qui ne fait pas partie de l'invention, un dispositif électronique comprenant les composants électroniques 26, 27, 28 est disposé sur la lentille ophtalmique.

Selon le deuxième mode de réalisation, un dispositif électronique comprenant les composants électroniques 34, 35 est disposé en continuité de matière avec la lentille ophtalmique.

Dans chacun de ces modes de réalisation, la lentille ophtalmique comprend deux parties rigides, 10 et 20 pour le premier mode de réalisation, 31 et 32 pour le deuxième mode de réalisation, usuellement dénommées coques, disposées au regard l'une de l'autre. Les deux coques, 10 et 20, 31 et 32 sont reliées entre elles par un joint et agencées de manière à former une cavité au sein de laquelle est disposé un matériau électrochrome; un composant électronique, respectivement 27, 34, du dispositif électronique génère un signal de nature à activer une variation colorimétrique du matériau électrochrome.

La figure 1 représente un schéma d'une vue de dessus de la face intérieure de la coque 10 de la lentille ophtalmique selon le premier mode de réalisation, sur laquelle est notamment disposé le composant électronique 27 faisant partie du dispositif électronique. Selon un mode de réalisation, le composant électronique 27 est un micro-processeur. Cette coque 10 comprend des bandes conductrices (également appelées « pistes ») 12 déposées d'une part sur un contour correspondant à celui de la cavité au sein de laquelle est disposé un matériau électrochrome et d'autre part dans une zone extérieure à ce contour de manière à permettre une liaison au micro-processeur 27 et des communications avec et entre d'autres composants électroniques 26, 28. A titre d'exemple, les composants 26, 28 peuvent être choisis parmi une diode, par exemple une diode dite « ALS » (pour « ambiant light sensor » en anglais), un magnétomètre, un composant radio, un dispositif d'imagerie, une caméra, un capteur, par exemple un capteur de position (GPS) et/ou un capteur de proximité, un moteur. Ces composants 26, 28 sont en communication avec le micro-processeur 27 et échangent des informations avec ce dernier afin qu'il commande le matériau électrochrome en fonction de données enregistrées par les composants 26, 28. Les différents composants peuvent échanger entre eux des signaux en mode filaire (par exemple selon un protocole Uart (pour « Universal Asynchronous Receiver Transmitter ») ou SPI (pour « Serial Peripheral Interface » ou I2C (pour « Inter-Integrated Circuit ») ou en mode non-filaire grâce à une interface de communication (par exemple selon un protocole Bluetooth ou Zigbee ou Wifi). Selon un mode de réalisation, le micro-processeur 27 gère les échanges de signaux entre composants et peut par exemple activer ou désactiver le fonctionnement des composants de manière à diminuer la consommation du dispositif électronique. La zone 11, à l'intérieur du contour correspondant à celui de la cavité au sein de laquelle est disposé un matériau électrochrome, correspond à la présence d'une couche d'oxyde d'indium dopé à l'étain (communément dénommé « ITO » pour « Indium tin oxide » en anglais).

La figure 2 représente un schéma en coupe du dispositif ophtalmique 25 où les coques 10 et 20 sont réunies par un joint 18 de manière à former une cavité 17 au sein de laquelle est disposé un matériau électrochrome. Chaque coque, 10, respectivement 20, comprend une partie 1, respectivement 2, en matériau rigide transparent dont la surface interne est recouverte d'une couche d'ITO 11, respectivement 21, formant électrode sur laquelle est déposée une bande conductrice 12, respectivement 22, pour permettre l'alimentation des électrodes 11, respectivement 21. Un plot 13, respectivement 23 suit le contour de la bande conductrice 12, respectivement 22, et sert de support au joint 18. La bande conductrice 12 de la coque 10 se poursuit dans une zone extérieure au contour correspondant à celui de la cavité au sein de laquelle est disposé un matériau électrochrome de manière à permettre une liaison au dispositif électronique 27 et des communications avec et entre d'autres composants électroniques 26, 27. Les liaisons au dispositif électronique 27 sont effectuées par des soudures 16 qui se connectent à des plots 15 correspondant à des protubérances de la bande conductrice 12.

Selon un mode de réalisation, le dispositif ophtalmique 25 du premier mode de réalisation est fabriqué de la manière suivante : les couches d'ITO 11, 21, formant électrodes et les bandes conductrices 12, 22, comprenant les plots 13, 23, 15 sont fabriquées par des techniques connues en soi de photolithographie du type de celles mise en œuvre pour réaliser des circuits en microélectronique ; ces techniques mettent en œuvre des masques, notamment en résine, des attaques chimiques, par exemple pour enlever l'ITO dans des zones destinées à recevoir des composants électroniques, des dépôts de métaux, par exemple par dépôt par voie physique (« PVD » pour « physical vapor deposition », en anglais). Après dépôt des couches d'ITO 11, 21 et des bandes conductrices 12, 22 sur respectivement les coques 10, 20, ces coques sont assemblées par dépose d'un cordon de colle et assemblage des deux coques sous pression. Les composants électroniques 26, 27, 28 du dispositif électronique sont ensuite soudés.

La figure 3 représente un schéma en coupe partielle du dispositif ophtalmique 30 selon le deuxième mode de réalisation. Les deux coques 31, 32 comprennent chacune une surface extérieure, respectivement 311 et 321, une surface intérieure, respectivement 312 et 322, et un bord périphérique, respectivement 313 et 323 ; comme décrit précédemment, chacune des surfaces intérieures 312, 322 est pourvue d'une couche d'ITO 11, 21, formant électrode et d'une bande conductrice. Un matériau électrochrome 325 est disposé entre les deux surfaces intérieures 312, 322. Un joint réunit les deux coques sur la plus grande partie de leurs périphéries, le long des bords 313, 323. Les deux coques sont réunies sur une petite partie de leurs périphéries par une pièce 33. La pièce 33 est sensiblement parallélépipédique et sa largeur, en contact avec les bords 313, 323, est de l'ordre de quelques millimètres, son épaisseur de l'ordre de quelques dixièmes de millimètres, et sa longueur de l'ordre du centimètre. Selon un mode de réalisation, la pièce 33 est flexible et comprend une partie principale centrale s'étendant sur toute la largeur et toute la longueur, en polyimide (par exemple de l'ordre d'un millimètre d'épaisseur) ; cette partie centrale est recouverte sur chacune de ses faces d'une mince couche d'un matériau adhésif, puis d'une mince couche de cuivre, puis d'une mince couche d'or, elle-même recouverte par un film protecteur. La partie centrale est notée 331 et les couches qui la recouvrent de chaque côté sont notées 332 et 333. Les couches de cuivre et d'or forment des couches conductrices sur chaque côté de la partie centrale 331. Un dispositif électronique comprenant un microprocesseur 34 et un capteur 35 est disposé à une extrémité 336 de la pièce 33. L'autre extrémité 335 de la pièce 33 est insérée entre les deux coques 31 et 32, dans une zone comprenant les bords 313 et 323. Cette extrémité 335 assure la continuité de matière entre les coques 31 et 32 et le dispositif électronique. L'extrémité 335 joue un rôle de cale d'épaisseur entre les deux coques 31 et 32. Par ailleurs, les couches de protections et les couches conductrices de la partie 33 sont agencées de manière à permettre une continuité électrique entre les bandes conductrices de chacune des coques et le microprocesseur 34. Une continuité électrique est également établie entre le microprocesseur 34 et le capteur 35. Les communications entre composants peuvent être établies selon l'un des modes de réalisation décrit pour le premier mode de réalisation.

Selon un mode de réalisation, la pièce 33, comprenant le dispositif électronique, est fabriquée avant l'assemblage des coques, par exemple selon des techniques usuelles de microélectronique, du type de celles exposées ci-dessus.

La figure 4 représente un schéma en vue de face d'une monture 45 équipée du dispositif ophtalmique 30 pour constituer un équipement ophtalmique 40 selon la présente invention. La monture 45 comprend deux cercles 46 (un seul est représenté) reliés par un pont 47. Le dispositif ophtalmique 30 est placé dans le cercle 46. Il est disposé dans la monture 45 de manière à ce que le dispositif électronique comprenant un microprocesseur 34 et un capteur 35 soit agencé dans une zone 48 du pont de la monture. Selon le mode de réalisation représenté, le pont comprend également des vias 49 pour la reprise de contact des faces de la pièce 33.

Il apparait que le dispositif électronique du premier et du deuxième mode de réalisation est disposé en périphérie de la lentille ophtalmique, de manière à ne pas créer de gêne visuelle pour un porteur. Selon un mode de réalisation, le dispositif électronique est translucide.

Selon un mode de réalisation, un dispositif ophtalmique comprenant deux coques, tel que le dispositif ophtalmique 25 du premier mode de réalisation ou le dispositif ophtalmique 30 selon le deuxième mode de réalisation, est associé à une lentille ophtalmique additionnelle adaptée à corriger les amétropies du porteur ; le dispositif ophtalmique comprenant deux coques est alors adapté pour faire partie d'un équipement ophtalmique adapté à de très nombreux porteurs, indépendamment de leurs prescriptions. L'assemblage entre le dispositif ophtalmique comprenant deux coques et la lentille ophtalmique additionnelle peut s'effectuer par collage, par clipsage, assemblage avec un espace séparateur rempli d'air ou d'un liquide d'indice ou toute autre technique adaptée.

Selon un mode de réalisation, un dispositif électronique d'un dispositif ophtalmique selon la présente invention, par exemple celui comprenant les composants électroniques 26, 27 et 28 ou celui comprenant les composants 34 et 35, est indépendant dans son fonctionnement, c'est-à-dire apte agir sur une fonctionnalité électro-commandée du dispositif ophtalmique sans apport d'information extérieure. A titre d'exemple, un tel dispositif électronique peut comprendre une fonction active, de nature à piloter la fonctionnalité électro-commandée du dispositif ophtalmique, et des capteurs permettant de mesurer des paramètres correspondant à un besoin d'un porteur qui sont traités au sein du dispositif électronique pour générer des signaux de pilotage de la fonction active. A titre d'exemple, les besoins d'un porteur correspondent à des variations de la fonctionnalité électro-commandée en fonction de comportements physiques du porteur, qui peuvent par exemple être déterminés par un inclinomètre, un accéléromètre ou tout autre capteur adapté à identifier un comportement du porteur. Selon un autre exemple, les besoins d'un porteur correspondent à des variations de la fonctionnalité électro-commandée en fonction de paramètres extérieurs au porteur, comme notamment la luminosité du lieu où il se situe et l'évolution de cette luminosité, par exemple en fonction des déplacements du porteur. Un tel dispositif électronique comprend en général des composants de mémoire de nature à stocker des instructions correspondant à un ou plusieurs mode d'activation d'une fonctionnalité électro-commandée. Selon un mode de réalisation, les besoins d'un porteur sont associés à un état identifié par un composant d'identification d'un état, tel un capteur, où l'état est associé à des instructions correspondant à un mode d'activation de la fonctionnalité électro-commandée stocké dans un composant de mémoire afin de générer une séquence d'instructions de nature à agir sur ladite fonctionnalité électro-commandée. Un mode d'activation d'une fonctionnalité électro-commandée peut être stocké dans un composant de mémoire en fonction d'un besoin prédéterminé défini pour un porteur donné. Selon un autre mode de réalisation, une pluralité de modes d'activation d'une fonctionnalité électro-commandée est stockée dans un ou des composants de mémoire et un parmi ces modes d'activation d'un besoin prédéterminé est choisi en fonction d'un besoin d'un porteur donné. A cette fin, des bibliothèques de fonction peuvent être établies et stockées. Le dispositif électronique peut être autonome, c'est-à-dire disposer en outre de moyen de stockage ou de génération d'énergie électrique.

A titre d'exemple, les fonctions stockées dans des bibliothèques de fonction peuvent être de nature suivante :
- Fonction de variation de la puissance dioptrique de la lentille ophtalmique en fonction d'un paramètre mesuré, par exemple addition de puissance dioptrique dans une zone de la lentille ophtalmique quand on détermine que cette zone correspond à un usage en vision de près ;
- Fonction de variation de la teinte de la lentille ophtalmique en fonction d'un paramètre mesuré, par exemple obscurcissement d'une quantité donnée en fonction d'un flux lumineux détecté, par exemple en considérant la taille de la pupille du porteur ou la quantité de lumière environnante comme paramètre ;
- Toute fonction de nature à permettre de lier les fonctions d'activation d'une fonctionnalité électro-commandée avec un ou une pluralité de paramètre(s) mesuré(s) par un ou une pluralité de capteur(s) ou dispositif(s) de mesure ;
- Toute fonction de nature à calculer les relations entre paramètre(s) mesuré(s) et un ou une pluralité d'état(s) de la (des) fonctionnalité(s) électro-commandée(s) ;
- Toute fonction de nature à identifier et/ou enregistrer des relations entre paramètre(s) mesuré(s) et un ou une pluralité d'état(s) de la (des) fonctionnalité(s) électro-commandée(s), comme par exemple des habitudes du porteur ;
- Toute fonction de nature à établir des relations d'apprentissage entre paramètre(s) mesuré(s) et un ou une pluralité d'état(s) de la (des) fonctionnalité(s) électro-commandée(s), basées par exemple sur les habitudes du porteur.

Selon un mode de réalisation, une fonctionnalité électro-commandée peut être activée partiellement ou en totalité par un dispositif activé mécaniquement et apte à transmettre une information à un composant du dispositif électronique d'un dispositif ophtalmique selon la présente invention. Selon un mode de réalisation, un tel dispositif activé mécaniquement comprend ou est associé à une interface homme-machine (« IHM »). A titre d'exemple, le dispositif activé mécaniquement est compris dans la monture destinée à recevoir le dispositif ophtalmique ; il peut par exemple être activé par le toucher d'une branche de la monture. Selon un autre mode de réalisation, le dispositif activé mécaniquement peut faire partie du dispositif ophtalmique, voire être intégré à son dispositif électronique ; il peut s'agir par exemple d'un composant comprenant un accéléromètre sensible qui peut être activé par tapotement ou contact de d'une branche de la monture; le type de tapotement ou de contact peut être paramétré de manière à activer sélectivement différents états d'une fonctionnalité électro-commandée.

Selon un mode de réalisation, un dispositif électronique d'un dispositif ophtalmique selon la présente invention, par exemple celui comprenant les composants électroniques 26, 27 et 28 ou celui comprenant les composants 34 et 35, est communiquant, de nature à échanger un signal avec un ou plusieurs dispositif(s) électronique(s) situés à l'extérieur dudit dispositif ophtalmique. Il est ainsi possible d'activer partiellement ou en totalité un composant du dispositif électronique d'un dispositif ophtalmique selon la présente invention. Le signal d'activation peut être émis par exemple par un terminal, notamment un smartphone ou tout autre dispositif communiquant adapté. Il est également possible d'utiliser la fonction de communication d'un tel dispositif ophtalmique pour charger des informations et/ou des instructions et/ou des fonctions destinées à interagir avec un ou plusieurs mode d'activation d'une fonctionnalité électro-commandée. A titre d'exemple, des données et/ou paramètres propres à un porteur donné peuvent être ainsi introduits dans le dispositif ophtalmique pour en assurer la personnalisation.

L'échange de signaux avec un ou plusieurs dispositif(s) électronique(s) situés à l'extérieur du dispositif ophtalmique peut être mis en œuvre selon toutes les techniques de communication usuelles, telles que par exemple Bluetooth, ANT, Zigbee, Wifi, Lifi (pour « Light Fidelity ») pour des télécommunications à courte distance, ou SigFox, LORA, GSM pour des télécommunications à longue distance. Selon un mode de réalisation, une antenne est disposée parmi les composants d'un dispositif électronique. Selon un mode de réalisation, les signaux échangés sont codés, par exemple à l'aide d'un algorithme de cryptographie asymétrique, notamment à l'aide d'une « clé » RSA.

Le dispositif ophtalmique peut ainsi communiquer avec une « centrale de calcul » externe, par exemple avec un smartphone ou avec un lieu déporté, notamment par le biais d'un smartphone. Il est ainsi possible de limiter les opérations que doit effectuer le microprocesseur du dispositif ophtalmique et ainsi diminuer le nombre de composants et/ou l'énergie consommée par le dispositif électronique. Entre le dispositif ophtalmique et son environnement, il est ainsi possible d'échanger de nombreuses informations, telles que par exemple relatives à la quantité de lumière transmise par le dispositif ophtalmique, à des états de fonctionnement du dispositif électronique (comme par exemple son état de charge, des données de consommation, des informations relatives à la détection d'éventuelles pannes). De telles informations peuvent être utilisées pour la maintenance du dispositif ophtalmique. Il est également possible d'enregistrer des informations liées aux usages du porteur, et par exemple les stocker sur un serveur distant de manière à pouvoir les sauvegarder et les réutiliser en cas de besoin. Selon un mode de réalisation, un équipement ophtalmique comprend deux dispositifs ophtalmiques, chacun dotés de moyens de communication, qui communiquent entre eux.

Les signaux/instructions communiqués au microprocesseur du dispositif ophtalmique peuvent être de nature très variée, comme par exemple provenir de la voix du porteur, de mouvements effectués par le porteur.

Selon un mode de réalisation, le dispositif électronique peut être associé à un verre semi-fini, ne possédant qu'une seule surface optique utile, ou un palet constitué de la même matière que la lentille ophtalmique, mais ne possédant pas de surface optiquement utile. La lentille ophtalmique est alors obtenue par surfaçage de la surface non optiquement utile du semi-fini, ou par surfaçage des deux surfaces non optiquement utiles du palet, afin d'obtenir une lentille ophtalmique possédant deux surfaces optiquement utiles. Ces opérations de surfaçage sont suivies d'une opération de détourage, permettant d'obtenir à partir d'un semi-fini ou d'un palet, une lentille ophtalmique à la forme des cercles 46. Afin de permettre l'utilisation de ces semi-fini ou palets pour une grande quantité de montures de formes de cercles 46 différentes, et sans nécessiter d'utiliser autant de semi-finis ou palets, on peut envisager en préalable à l'étape de surfaçage, de positionner la forme de cercle 46 par des opérations de translation ou rotation, afin de sélectionner à quel endroit dans la forme se situe le dispositif électronique. Par exemple, si on dispose d'une forme de cercle 46 rectangulaire, d'un verre semi-fini intégrant le dispositif électronique et que l'on souhaite positionner le dispositif électronique du côté temporal de la forme de cercle, alors on positionne la forme de cercle en conséquence, puis on surface la face non optiquement utile de manière à apporter au porteur la correction optique nécessaire en chaque point de la forme de cercle. On peut faire de même pour une autre forme de cercle et une autre correction optique. Il est ainsi possible d'utiliser le même semi-fini pour différentes formes de cercle et différente corrections optiques, tout en positionnant le dispositif électronique dans une zone ne créant pas de gêne visuelle. De la même manière, il est aussi possible de choisir la position du dispositif électronique dans la lentille ophtalmique pour une même forme de cercle et même correction optique. On peut par exemple préférer positionner le dispositif électronique du côté temporal, ou du côté nasal, en positionnant la forme du cercle en conséquence dans le semi-fini ou dans le palet. Par exemple si le dispositif électronique utilise une caméra imageant l'oeil, on peut positionner le dispositif électronique dans la forme de cercle de manière à ce que le champ de la caméra couvre bien l'oeil du porteur de la lentille ophtalmique.

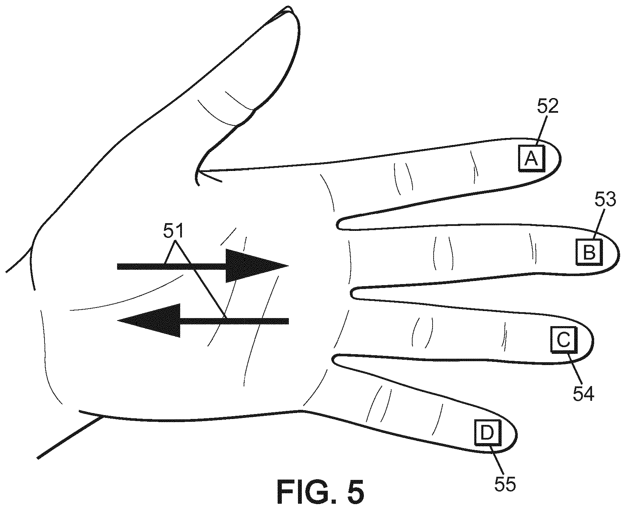

Selon un mode de réalisation du dispositif ophtalmique selon la présente invention illustré par la figure 5 qui représente schématiquement la main d'un porteur, la communication entre le porteur et le dispositif ophtalmique est assurée par l'observation de mouvement du porteur sur sa main. Une caméra, par exemple disposée dans le dispositif ophtalmique, filme la main du porteur et analyse, par exemple grâce à un dispositif de reconnaissance de forme, des mouvements effectués sur sa main. Ces mouvements peuvent être effectués avec un doigt qui glisse ou appuie sur la main. Il est possible de paramétrer des mouvements types auxquels sont assignés des instructions de nature à piloter le dispositif ophtalmique. Selon un mode de réalisation, des allers et venues 51 sur la paume correspondent à une instruction et le fait de taper ou d'appuyer sur une zone d'un doigt 52, 53, 54, 55 correspond à une autre instruction. A titre d'exemple, des allers et venues 51 sur la paume peuvent être associées à un réglage d'amplitude d'une fonction, comme par exemple la quantité de lumière à transmettre. A titre d'exemple, le fait de taper ou d'appuyer sur une zone d'un doigt en 52 (zone A), 53 (zone B), 54 (zone C), 55 (zone D), peut être associée respectivement au déclenchement d'une fonction, à l'arrêt de ladite fonction, à une commande manuelle de ladite fonction, à une commande automatique de ladite fonction. De nombreuses fonctions peuvent être ainsi commandées. Il est possible de définir des zones dans la main qui seraient de nature à correspondre à différentes zones du dispositif ophtalmique.

Bien évidemment, l'invention est limitée par les revendications, mais n'est pas limitée aux modes de réalisations décrits précédemment et fournis uniquement à titre d'exemple.

## Revendications

1. Dispositif ophtalmique (25, 30) comprenant :
- une lentille ophtalmique pour lunette qui est associée à au moins une fonctionnalité électro-commandée et qui comprend deux coques (10 et 20, 31 et 32) présentant chacune une surface intérieure (312 et 322) et une surface extérieure (311 et 321), lesdites surfaces intérieures desdites coques étant agencées de manière à former une cavité (17) au sein de laquelle est disposé un matériau électrochrome (325), lesdites coques étant pourvues de bandes conductrices (12, 22) sur un contour correspondant à ladite cavité, et
- au moins un dispositif électronique (26, 27, 28, 34 et 35) qui est adapté pour activer ladite fonctionnalité électro-commandée et qui est disposé en continuité de matière avec ladite lentille ophtalmique,
**caractérisé en ce que** lesdites bandes conductrices assurent une liaison électrique avec ledit dispositif électronique,
où la lentille ophtalmique comprend deux surfaces principales et un bord reliant lesdites deux surfaces principales, et où le dispositif électronique (34 et 35) est disposé sur une partie de matière en continuité avec le bord de ladite lentille ophtalmique, dans ladite zone extérieure au contour correspondant à ladite cavité (17), sur une pièce (33) sensiblement parallélépipédique qui est insérée entre lesdites coques (31 et 32), ladite pièce présentant une extrémité (335) réunissant lesdites coques l'une à l'autre à la manière d'une cale d'épaisseur pour assurer une continuité de matière entre lesdites coques (31, 32) et le dispositif électronique, le dispositif électronique (26, 27, 28, 34 et 35) étant disposé sur l'autre extrémité (336) de la pièce (33).

2. Dispositif ophtalmique (25) selon la revendication 1, dans lequel le dispositif électronique (26, 27, 28) est relié dans ladite zone extérieure à une dite bande conductrice (12) par des soudures (16) connectées à des plots (15) correspondant à des protubérances de ladite bande conductrice.

3. Dispositif ophtalmique (25) selon la revendication 2, dans lequel lesdites coques (10 et 20) sont réunies par un joint (18) de manière à former ladite cavité (17) et sont pourvues de plots (13, 23) de support dudit joint qui suivent le contour desdites bandes conductrices (12, 22).

4. Dispositif ophtalmique (30) selon la revendication 1, dans lequel ladite pièce (33) est recouverte de couches conductrices et d'une couche de protection (332, 333) les surmontant assurant une continuité électrique entre lesdites bandes conductrices et le dispositif électronique (34, 35).

5. Dispositif ophtalmique (25, 30) selon l'une quelconque des revendications précédentes, dans lequel la fonctionnalité électro-commandée de la lentille ophtalmique est une variation de phase et/ou une variation d'amplitude et/ou une activation d'au moins une couche électro-commandée et/ou une présentation d'information par ladite lentille.

6. Dispositif ophtalmique (25, 30) selon l'une quelconque des revendications précédentes, dans lequel le dispositif électronique (26, 27, 28, 34 et 35) est un dispositif électronique autonome.

7. Dispositif ophtalmique (25, 30) selon l'une quelconque des revendications précédentes, dans lequel le dispositif électronique (26, 27, 28, 34 et 35) comprend au moins un composant électronique actif, choisi notamment parmi une diode (26, 28), un magnétomètre, un composant radio, un microprocesseur (27, 34), un dispositif d'imagerie, une caméra, un capteur (35), un capteur de position (GPS), un moteur.

8. Dispositif ophtalmique (25, 30) selon l'une quelconque des revendications précédentes, dans lequel le dispositif électronique (26, 27, 28, 34 et 35) est un dispositif électronique communiquant de nature à échanger un signal avec un ou plusieurs dispositif(s) électronique(s) situés à l'extérieur dudit dispositif ophtalmique.

9. Dispositif ophtalmique (25, 30) selon l'une quelconque des revendications précédentes, dans lequel le dispositif électronique (26, 27, 28, 34 et 35) comprend un ou des composants d'identification d'un état, permettant d'identifier un ou plusieurs état(s) dudit dispositif, tel que notamment un capteur, par exemple un accéléromètre, un inclinomètre, un gyroscope, un dispositif de mesure de quantité de lumière, une caméra, un capteur de température, un capteur de proximité, un capteur de présence, un capteur d'humidité, un capteur temporel.

10. Dispositif ophtalmique (25, 30) selon l'une quelconque des revendications précédentes, dans lequel le dispositif électronique (26, 27, 28, 34 et 35) comprend un ou des composants de mémoire de nature à stocker des instructions correspondant à un ou plusieurs mode d'activation d'une fonctionnalité électro-commandée.

11. Dispositif ophtalmique (25, 30) selon les revendications 9 et 10 prises en combinaison, dans lequel un état identifié par un composant d'identification d'un état est associé à des instructions correspondant à un mode d'activation de la fonctionnalité électro-commandée stocké dans un composant de mémoire afin de générer une séquence d'instructions de nature à agir sur ladite fonctionnalité électro-commandée,
dans lequel un mode d'activation d'une fonctionnalité électro-commandée est stocké dans un composant de mémoire en fonction d'un besoin prédéterminé défini pour un porteur donné, et
dans lequel une pluralité de modes d'activation d'une fonctionnalité électro-commandée est stockée dans un ou des composants de mémoire et où un parmi ces modes d'activation d'un besoin prédéterminé est choisi en fonction d'un besoin d'un porteur donné.

12. Equipement ophtalmique (40) comprenant au moins une monture (45) et au moins un dispositif ophtalmique (25, 30) selon l'une quelconque des revendications précédentes.

## Patentansprüche

1. Ophthalmische Vorrichtung (25, 30), umfassend:
- eine ophthalmische Linse für eine Brille, die mindestens einer elektrisch gesteuerten Funktion zugeordnet ist und die zwei Schalen (10 und 20, 31 und 32) umfasst, die jeweils eine Innenfläche (312 und 322) und eine Außenfläche (311 und 321) aufweisen, wobei die Innenflächen der Schalen so gestaltet sind, dass sie einen Hohlraum (17) bilden, in dem ein elektrochromes Material (325) angeordnet ist, wobei die Schalen mit leitfähigen Streifen (12, 22) an einem dem Hohlraum entsprechenden Umfang versehen sind, und
- mindestens eine elektronische Vorrichtung (26, 27, 28, 34 und 35), die dazu geeignet ist, die elektrisch gesteuerte Funktion zu aktivieren, und die materialdurchgängig mit der ophthalmischen Linse angeordnet ist,
**dadurch gekennzeichnet, dass** die leitfähigen Streifen eine elektrische Verbindung mit der elektronischen Vorrichtung gewährleisten,
wobei die ophthalmische Vorrichtung zwei Hauptflächen und einen die beiden Hauptflächen verbindenden Rand umfasst und wobei die elektronische Vorrichtung (34 und 35) an einem mit dem Rand der ophthalmischen Linse durchgängigen Materialteil in dem Außenbereich an dem dem Hohlraum (17) entsprechenden Umfang an einem im Wesentlichen quaderförmigen Teil (33) angeordnet ist, das zwischen den Schalen (31 und 32) eingefügt ist, wobei das Teil ein Ende (335) aufweist, das die Schalen wie ein Distanzstück miteinander verbindet, um einen Materialdurchgang zwischen den Schalen (31, 32) und der elektronischen Vorrichtung zu gewährleisten, wobei die elektronische Vorrichtung (26, 27, 28, 34 und 35) an dem anderen Ende (336) des Teils (33) angeordnet ist.

2. Ophthalmische Vorrichtung (25) nach Anspruch 1, wobei die elektronische Vorrichtung (26, 27, 28) in dem Außenbereich mit einem leitfähigen Streifen (12) durch Lötstellen (16) verbunden ist, die an Kontaktelemente (15) angeschlossen sind, die Erhebungen des leitfähigen Streifens entsprechen.

3. Ophthalmische Vorrichtung (25) nach Anspruch 2, wobei die Schalen (10 und 20) durch eine Dichtung (18) so verbunden sind, dass der Hohlraum (17) gebildet wird, und mit Kontaktelementen (13, 23) zur Stützung der Dichtung versehen sind, die dem Umfang der leitfähigen Streifen (12, 22) folgen.

4. Ophthalmische Vorrichtung (30) nach Anspruch 1, wobei das Teil (33) mit leitfähigen Schichten und mit einer über ihnen liegenden Schutzschicht (332, 333) überzogen ist, die einen elektrischen Durchgang zwischen den leitfähigen Streifen und der elektronischen Vorrichtung (34, 35) gewährleisten.

5. Ophthalmische Vorrichtung (25, 30) nach einem der vorhergehenden Ansprüche, wobei die elektrisch gesteuerte Funktion der ophthalmischen Linse eine Phasenänderung und/oder eine Amplitudenänderung und/oder eine Aktivierung mindestens einer elektrisch gesteuerten Schicht und/oder eine Informationsanzeige durch die Linse ist.

6. Ophthalmische Vorrichtung (25, 30) nach einem der vorhergehenden Ansprüche, wobei die elektronische Vorrichtung (26, 27, 28, 34 und 35) eine autonome elektronische Vorrichtung ist.

7. Ophthalmische Vorrichtung (25, 30) nach einem der vorhergehenden Ansprüche, wobei die elektronische Vorrichtung (26, 27, 28, 34 und 35) mindestens eine aktive elektronische Komponente umfasst, die insbesondere aus einer Diode (26, 28), einem Magnetometer, einer Funkkomponente, einem Mikroprozessor (27, 34), einer Bildgebungsvorrichtung, einer Kamera, einem Sensor (35), einem Positionssensor (GPS), einem Motor ausgewählt ist.

8. Ophthalmische Vorrichtung (25, 30) nach einem der vorhergehenden Ansprüche, wobei die elektronische Vorrichtung (26, 27, 28, 34 und 35) eine elektronische Vorrichtung ist, die derart kommuniziert, dass sie ein Signal mit einer oder mehreren elektronischen Vorrichtung(en) austauscht, die außerhalb der ophthalmischen Vorrichtung gelegen ist(sind).

9. Ophthalmische Vorrichtung (25, 30) nach einem der vorhergehenden Ansprüche, wobei die elektronische Vorrichtung (26, 27, 28, 34 und 35) eine oder mehrere Komponenten zur Identifizierung eines Zustands umfasst, die es ermöglicht(ermöglichen), einen Zustand oder mehrere Zustände der Vorrichtung zu identifizieren, wie insbesondere einen Sensor, beispielsweise einen Beschleunigungsmesser, einen Neigungsmesser, ein Gyroskop, eine Lichtmengenmessvorrichtung, eine Kamera, einen Temperatursensor, einen Näherungssensor, einen Anwesenheitssensor, einen Feuchtigkeitssensor, einen Zeitsensor.

10. Ophthalmische Vorrichtung (25, 30) nach einem der vorhergehenden Ansprüche, wobei die elektronische Vorrichtung (26, 27, 28, 34 und 35) eine oder mehrere Speicherkomponenten umfasst, die geeignet sind, Anweisungen zu speichern, die einem oder mehreren Aktivierungsmodi einer elektrisch gesteuerten Funktion entsprechen.

11. Ophthalmische Vorrichtung (25, 30) nach Anspruch 9 in Verbindung mit Anspruch 10, wobei ein von einer Komponente zur Identifizierung eines Zustands identifizierter Zustand Anweisungen zugeordnet ist, die einem Aktivierungsmodus der elektrisch gesteuerten Funktion entsprechen, der in einer Speicherkomponente gespeichert ist, um eine Anweisungssequenz zu erzeugen, die geeignet ist, auf die elektrisch gesteuerte Funktion einzuwirken,
wobei ein Aktivierungsmodus einer elektrisch gesteuerten Funktion in einer Speicherkomponente in Abhängigkeit von einem vorbestimmten Bedarf, der für eine gegebenen Träger definiert wird, gespeichert ist und
wobei eine Mehrzahl von Aktivierungsmodi einer elektrisch gesteuerten Funktion in einer oder mehreren Speicherkomponenten gespeichert ist und wobei einer unter diesen Aktivierungsmodi eines vorbestimmten Bedarfs in Abhängigkeit von einem Bedarf eines gegebenen Trägers ausgewählt wird.

12. Ophthalmische Ausrüstung (40), umfassend mindestens ein Gestell (45) und mindestens eine ophthalmische Vorrichtung (25, 30) nach einem der vorhergehenden Ansprüche.

## Claims

1. Ophthalmic device (25, 30) comprising:
- an ophthalmic lens for spectacles, which ophthalmic lens is associated with at least one electro-controlled functionality and comprises two shells (10 and 20, 31 and 32) each having an inner surface (312 and 322) and an outer surface (311 and 321), said inner surfaces of said shells being arranged so as to form a cavity (17) within which an electrochromic material (325) is arranged, said shells being provided with conductive strips (12, 22) on an outline corresponding to said cavity, and
- at least one electronic device (26, 27, 28, 34 and 35) that is configured to activate said electro-controlled functionality and that is arranged in material continuity with said ophthalmic lens,
**characterized in that** said conductive strips make an electrical connection with said electronic device,
the ophthalmic lens comprising two major surfaces and an edge linking said two major surfaces, and the electronic device (34 and 35) being arranged on a material portion in continuity with the edge of said ophthalmic lens, in said zone outside the outline corresponding to said cavity (17), on a substantially parallelepipedal part (33) that is inserted between said shells (31 and 32), said part having an end (335) joining said shells to each other in the manner of a spacer of given thickness to ensure material continuity between said shells (31, 32) and the electronic device, the electronic device (26, 27, 28, 34 and 35) being arranged on the other end (336) of the part (33).

2. Ophthalmic device (25) according to Claim 1, wherein the electronic device (26, 27, 28) is linked in said outer zone to one said conductive strip (12) by solder joints (16) connected to pads (15) corresponding to protrusions of said conductive strip.

3. Ophthalmic device (25) according to Claim 2, wherein said shells (10 and 20) are joined by a seal (18) so as to form said cavity (17) and are provided with pads (13, 23) for supporting said seal that follow the outline of said conductive strips (12, 22).

4. Ophthalmic device (30) according to Claim 1, wherein said part (33) is covered with conductive layers and with a protective layer (332, 333) overlying them ensuring electrical continuity between said conductive strips and the electronic device (34, 35).

5. Ophthalmic device (25, 30) according to any of the preceding claims, wherein the electro-controlled functionality of the ophthalmic lens is a phase variation and/or an amplitude variation and/or activation of at least one electro-controlled layer and/or presentation of information by said lens.

6. Ophthalmic device (25, 30) according to any of the preceding claims, wherein the electronic device (26, 27, 28, 34 and 35) is a stand-alone electronic device.

7. Ophthalmic device (25, 30) according to any of the preceding claims, wherein the electronic device (26, 27, 28, 34 and 35) comprises at least one active electronic component, in particular chosen from a diode (26, 28), a magnetometer, a radio component, a microprocessor (27, 34), an imaging device, a camera, a sensor (35), a position sensor (GPS), and a motor.

8. Ophthalmic device (25, 30) according to any of the preceding claims, wherein the electronic device (26, 27, 28, 34 and 35) is a communicating electronic device capable of exchanging a signal with one or more electronic devices located outside said ophthalmic device.

9. Ophthalmic device (25, 30) according to any of the preceding claims, wherein the electronic device (26, 27, 28, 34 and 35) comprises one or more components for identifying a state, allowing one or more states of said device to be identified, such as in particular a sensor, for example an accelerometer, an inclinometer, a gyroscope, a device for measuring an amount of light, a camera, a temperature sensor, a proximity sensor, a presence sensor, a humidity sensor, or a sensor of time.

10. Ophthalmic device (25, 30) according to any of the preceding claims, wherein the electronic device (26, 27, 28, 34 and 35) comprises one or more memory components capable of storing instructions corresponding to one or more modes of activation of an electro-controlled functionality.

11. Ophthalmic device (25, 30) according to Claims 9 and 10 in combination, wherein a state identified by a component for identifying a state is associated with instructions corresponding to a mode of activation of the electro-controlled functionality stored in a memory component in order to generate a sequence of instructions capable of acting on said electro-controlled functionality,
wherein a mode of activation of an electro-controlled functionality is stored in a memory component depending on a predetermined requirement defined for a given wearer, and
wherein a plurality of modes of activation of an electro-controlled functionality are stored in one or more memory components, one of these modes of activation of a predetermined requirement being selected depending on a requirement of a given wearer.

12. Ophthalmic equipment (40) comprising at least one frame (45) and at least one ophthalmic device (25, 30) according to any of the preceding claims.
